# EUROPEAN PATENT APPLICATION

(11) **EP 1 458 109 A1**
(43) Date of publication of application: **15.09.2004**
(21) Application number: 02790709.6
(22) Date of filing: 10.12.2002
(51) Int. Cl.: H04B 1/26

(54) **RECEIVER**

(30) Priority: 21.12.2001 JP 2001390258
(71) Applicant: Kabushiki Kaisha Toyoda Jidoshokki, Kariya-shi, Aichi 448-8671 (JP); Niigata Seimitsu Co., Ltd., Jyoetsu-shi, Niigata 943-0834 (JP)
(72) Inventor: MIYAGI, Hiroshi c/o NIIGATA SEIMITSU CO., LTD., Joetsu-shi, Niigata 943-0834 (JP)
(74) Representative: Leson, Thomas Johannes Alois, Dipl.-Ing.
(86) International application number: PCT/JP2002/012897
(87) International publication number: WO 2003/055088

(57) **Abstract**

This is a receiver comprising the first local oscillator, the first mixer, the first frequency switching means, the second local oscillator, the second mixer and the second frequency switching means. If N and M are natural numbers, the frequency of the first local oscillation signal generated by the first local oscillator is switched in such a way that a frequency of N×f1 ± M×f2 is greater by a prescribed value or more than the frequency of the incoming signal, that of the first IF signal and the second IF signal. The frequency of the second local oscillation signal is switched in such a way that the frequency of the second IF signal corresponds to the frequency of the first IF signal.

## Description

### Technical Field

The present invention relates to a receiver and in particular, relates to a double-conversion receiver using a plurality of intermediate frequencies (IF).

### Background Art

For example, as a receiver using a plurality of intermediate frequencies, there is a double-conversion receiver. A receiver adopting double-conversion basically comprises two local oscillators and converts that of an incoming signal into two types of intermediate frequencies in two steps.

Specifically, for example, a double-conversion receiver converts that of an incoming signal into a 10.7MHz intermediate frequency higher than that of the incoming signal, and further converts the 10.7MHz intermediate frequency into a 450kHz intermediate frequency.

An advantage obtained when a receiver using a plurality of intermediate frequencies, such as a double-conversion receiver, converts the frequency of an incoming signal into an intermediate frequency higher than the frequency of the incoming signal is the prevention of images from being disturbed.

In other words, a desired incoming signal is not mixed with the incoming signal of an adjacent broadcasting station.

As described above, a double-conversion receiver comprises two local oscillators in order to first convert the frequency of an incoming signal into a higher frequency and then convert it to a lower frequency. In a conventional double-conversion receiver, a signal with a frequency sum or difference between frequencies several times higher than that of a signal generated by the two local oscillators make an unnecessary signal (spurious signal). If the frequency of the unnecessary signal enters a desired incoming signal band or an intermediate frequency band, the frequency affects the demodulated signal of the incoming signal when the incoming signal is demodulated, which is a problem.

Specifically, since an unnecessary signal with the frequency sum or difference between frequencies obtained by multiplying the frequency of a local oscillator signal output by a plurality of local oscillators by a specific natural number enter either an incoming signal band or an intermediate frequency band, and the unnecessary signals generated by the plurality of local oscillators is superposed on the demodulated signal, the incoming signal cannot be demodulated to the original signal.

In order to prevent such an unnecessary signal from occurring, the plurality of local oscillators must be well adjusted. However, the occurrence of such an unnecessary signal in the semiconductor integration of a receiver circuit cannot be detected before the integration process somewhat advances. Furthermore, if such an unnecessary signal occurs, the process must be performed again from the beginning to modify the frequency of a local oscillator signal.

### Disclosure of Invention

It is an obj ect of the present invention to provide a receiver suited to prevent an unnecessary signal from occurring in a demodulated signal and suitable for semiconductor integration.

In order to solve the problem described above, the present invention is configured as follows.

Specifically, a receiver according to the present invention comprises a first local oscillator generating a first local oscillation signal; a first mixer mixing the first local oscillation signal with a received incoming signal and generating a first IF signal; a first frequency switching means for switching the frequency f1 of the first local oscillation signal generated by the first local oscillator; a second local oscillator generating a second local oscillation signal; a second mixer mixing the first IF signal with the second local oscillation signal and generating a second IF signal; and a second frequency switching means for switching the frequency f2 of the second local oscillation signal generated by the second local oscillator. If N and M are natural numbers, the first frequency switching means switches the frequency of the first local oscillation signal generated by the first local oscillator in such a way that a frequency of N×f1 ± M×f2 is greater by a prescribed value or more than the frequency of the incoming signal, that of the first IF signal and that of the second IF signal. The second frequency switching means switches the frequency of the second local oscillation signal in such a way that that frequency of the second IF signal corresponds to the frequency of the first intermediate oscillation signal.

In this way, an unnecessary signal is prevented from occurring in a demodulated signal.

In the receiver, it is preferable for each of the first and second local oscillators to be a PLL synthesizer. It is also preferable for respective programmable counters provided for the two PLL synthesizers to switch the respective frequencies of the first and second local oscillation signals generated by the first and second local oscillators, respectively.

In the receiver, the respective fractional-N programmable counters of the first and second frequency switching means switch respective frequencies.

Another receiver according to the present invention comprises a first local oscillator generating a first local oscillation signal; a first mixer mixing the first local oscillation signal with a received incoming signal and generating a first IF signal; a first frequency switching means for switching the frequency f1 of the first local oscillation signal generated by the first local oscillator; a second local oscillator generating a second local oscillation signal; a second mixer mixing the first IF signal with the second local oscillation signal and generating a second IF signal; and a second frequency switching means for switching the frequency f2 of the second local oscillation signal generated by the second local oscillator. If N and M are natural numbers, the first frequency switching means switches the frequency of the first local oscillation signal generated by the first local oscillator from the first frequency to the second frequency within an incoming frequency band in such a way that a frequency of N×f1 ± M×f2 is greater by a prescribed value or more than the frequency of the incoming signal, that of the first IF signal and that of the second IF signal. The second frequency switching means switches the frequency of the second local oscillation signal in such a way that the frequency of the second IF signal corresponds to the frequency of the first intermediate oscillation signal.

### Brief Description of Drawings

Fig. 1 shows the configuration of a receiver according to the present invention; and
Fig. 2 shows the circuit diagram of a PLL switching circuit switching the frequency of the first local oscillation signal in a receiver according to the present invention.

### Best Mode for Carrying Out the Invention

The preferred embodiment of the present invention is described below with reference to the drawings.

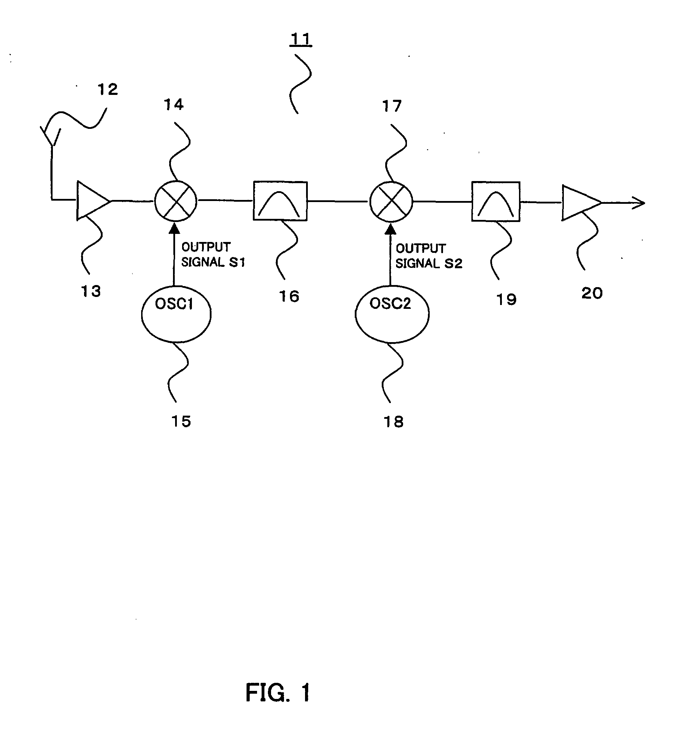

Fig. 1 shows the configuration of a receiver according to the present invention. As shown in Fig. 1, a double-conversion receiver 11 comprises an antenna 12, a RF amplifier circuit 13, a first mixer circuit 14, a first local oscillator 15, a first IF filter 16, a second mixer circuit 17, a second local oscillator 18, a second IF filter 19 and an IF amplifier circuit 20. In Fig. 1, the first local oscillator 15 and the second local oscillator 18 are denoted as OSC (oscillator) 1 and OSC 2, respectively. Although in this preferred embodiment, a double-conversion receiver using two intermediate frequencies is described as a receiver using a plurality of intermediate frequencies, the present invention is not limited to a double-conversion receiver, and a triple-conversion receiver can also be used. In other words, the number of used intermediate frequencies is not limited.

After amplifying an AM modulated signal received by the antenna 12 using the RF amplifier circuit 13, the double-conversion receiver 11 mixes the amplified signal with the first local oscillation signal output from the first local oscillator 15 and converts the amplified signal into a signal with a frequency higher than that of the received AM modulated signal (hereinafter called the "first IF signal") . Then, after extra frequency elements are cut by the first IF filter 16, the first IF signal is mixed with the second local oscillation signal output from the second local oscillator 18, and is converted into an IF signal with a frequency lower than that of the first IF signal (hereinafter called the "second IF signal").

As described above, a receiver according to the present invention temporarily converts an incoming signal into a signal with a frequency higher than that of the incoming signal, specifically, a frequency of or around 10.7MHz. Then, it further converts the signal with a frequency of or around 10.7MHz into a signal with a frequency of 450kHz.

One of the features of this preferred embodiment is that the double-conversion receiver 11 comprises the first local oscillator 15 generating the first local oscillation signal in such a way to provide a plurality of intermediate frequencies and the second local oscillator 18 generating the second local oscillation signal, based on the first local oscillation signal. In this case, the first local oscillator 15 switches the frequency of the first local oscillation signal generated by the first local oscillator in such a way that the frequency sum or difference between a frequency obtained by multiplying the first local oscillation signal output from the first local oscillator 15 by a specific natural number and a frequency obtained by multiplying the second local oscillation signal output from the second local oscillator 15 by a natural number, is greater by a prescribed value or more than the frequency of an incoming signal, that of the first IF signal and that of the second IF signal. Even in the case of a receiver using a plurality of (three or more) intermediate frequencies, as described above, the frequency of the first local oscillation signal generated by the first local oscillator 15 must be switched in such a way that at least the frequency sum or difference between a frequency obtained by multiplying the frequency of the first local oscillation signal by a natural number and a frequency obtained by multiplying the frequency of the second oscillation signal by a natural number is greater by a prescribed value or more than the frequency of an incoming signal, that of the first IF signal and the second IF.

In this way, an incoming signal can be demodulated without the influence of an unnecessary signal.

Specifically, a case where the frequencies of the first IF signal are, for example, 10.7MHz, 10.71MHz and 10.701MHz is studied below. These three frequencies are used assuming that a channel interval is 9kHz or 10kHz. If the channel interval is 9kHz, either 10.71MHz or 10.701MHz, each of which can be divided by 9, is selected. If the channel interval is 10kHz, either 10.7MHz or 10.71, each of which can be divided by 10, is selected.

In this case, it is preferable for the first IF filter 16 to be a band pass filter provided with a sufficiently broad passing bandwidth such as to correspond to any of the three intermediate frequencies of, for example, 10.7MHz, 10.71MHz and 10.701MHz.

For example, a case where the double-conversion receiver 11 receives a 531kHz AM modulated signal and the channel interval is 9kHz, is studied below.

Since the channel interval is 9kHz, the first local oscillator 15 switches the frequency of the first local oscillation signal in such a way that the frequency of the first IF signal will be 10.71MHz or 10.701MHz.

If the frequency of the first IF signal is 10.71MHz, the frequency of the first local oscillation signal and that of the second local oscillation signal become 11. 241MHz and 11.16MHz, respectively. Then, a frequency sum or difference between a frequency obtained by multiplying the frequency 11.241MHz of the first local oscillation signal by N (natural number) and a frequency obtained by multiplying the frequency 11.16MHz of the second oscillation signal by M (natural number) enters one of 531kHz signal band (531kHz ± 2kHz), 10.71MHz signal band (10.71MHz ± 2kHz) and 450kHz signal band (450kHz ± 2kHz), a demodulated signal is affected when the incoming signal is demodulated.

In this way, in the double-conversion receiver 11 of this preferred embodiment, the frequency of the first local oscillation signal generated by the first local oscillator 15 is switched in such a way that the three frequencies of the first IF signal are, for example, 10.7MHz, 10.71MHz and 10.701. If the channel interval is 9kHz, the frequency of the first IF signal is switched in such a way that the frequency of the first IF signal is either 10.71MHz or 10.701MHz. If an unnecessary signal with the frequency sum or difference between a frequency obtained by multiplying the first local oscillation signal by a natural number and a frequency obtained by multiplying the frequency of the second local oscillation signal by a natural number enters one of 531kMHz signal band, 10.71MHz signal band and 450kHz signal band, the frequency of the first local oscillation signal generated by the first local oscillator 15 is switched in such a way that the frequency of the first IF signal becomes 10.701MHz and the unnecessary signal is eliminated from the 531kHz, 10.71MHz or 450kHz signal band.

When the frequency of the first IF signal is switched, the frequency of the second local oscillation signal generated by the second local oscillator 18 must also be switched depending on the frequency.

Specifically, for example, if the frequency of the first IF signal is set to be switched to one of the three frequencies of 10. 7MHz, 10.71MHz and 10. 701MHz, a 450kHz second IF signal must be generated against any of the three frequencies. In this case, in order to generate a second IF signal with a specific frequency corresponding to the frequency of the first IF signal, the frequency of the second local oscillation signal generated by the second local oscillator 18 must be switched.

As described above, in the case of a receiver using a plurality of intermediate frequencies, similarly, the frequency of the first local oscillation signal generated by the first local oscillator 15 must be switched in such a way that the frequency sum or difference between respective frequencies obtained by multiplying the respective frequencies of the respective local oscillation signals generated by the respective local oscillators is greater by a prescribed value or more than the frequency of an incoming signal and that of each of all IF signals, depending on the number of used intermediate frequencies. The respective frequencies of the second, third, ... local oscillators must also be switched in such a way to correspond to the frequency of the first intermediate oscillation signal.

Alternatively, the frequency of the first local oscillation signal can be switched to a specific frequency across the entire incoming frequency band. Alternatively, the frequency of the first local oscillation signal can be switched only within a part of the incoming frequency band.

Next, the frequency switching operation for each of the respective local oscillation signals generated by the first oscillator 15 and the second oscillator 18, respectively, is described

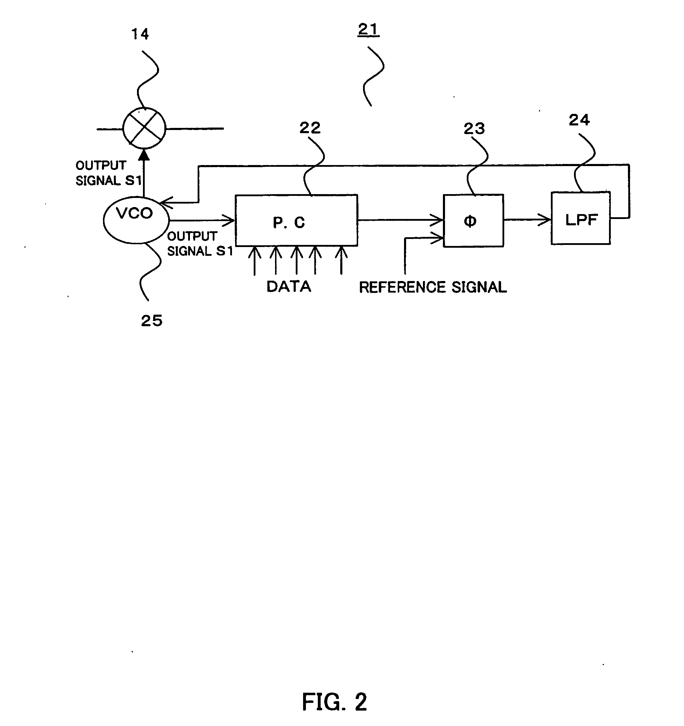

Fig. 2 shows the circuit diagram of a PLL (Phase Locked Loop) switching circuit (synthesizer) switching the frequency of the first local oscillation signal generated by the local oscillator 15. Since the frequency switching operation for the second local oscillation signal generated by the second local oscillator 18 is the same as that for the first local oscillation signal, the description of the frequency switching operation for the second local oscillation signal is omitted.

As shown in Fig. 2, reference number 21 represents a PLL switching circuit switching the frequency of the first local oscillation signal. The PLL switching circuit 21 comprises a programmable counter 22, a phase circuit 23, an LPF (Low Pass Filter) 24, a voltage-controlled oscillator (VCO) 25.

The output signal of the voltage-controlled oscillator 25 is input to the programmable counter 22. The programmable counter 22 divides the frequency of the output signal of the voltage-controlled oscillator 25 using input data (for example, a binary value) . Then, the divided signal is input to the phase circuit 23 and the phase of the divided frequency is compared with that of a reference signal. Then, the detected phase error is input to the LPF 24. After smoothing the signal input from the phase circuit 23, the LPF 24 inputs the signal to the voltage-controlled oscillator 25 as a control signal. Then, the voltage-controlled oscillator 25 switches the frequency of an output signal S1 to be output, based on the control signal.

Another feature of this preferred embodiment is that the PLL switching circuit 21 comprising the programmable counter 22 switches the respective frequencies of the first local oscillator 15 and the second local oscillator 18.

Specifically, an oscillation signal output from the first local oscillator is switched in such a way that no signal with the frequency sum or difference between a frequency obtained by multiplying the frequency of the first local oscillation signal by a natural number and a frequency obtained by multiplying the frequency of the second local oscillator by a natural number occurs in any of an incoming signal band, the first IF signal band and the second IF signal band.

Similarly, in order to generate the frequency of the second IF signal corresponding to that of the first IF signal, the PLL switching circuit switching the frequency of the second local oscillation signal also comprises a programmable counter. By modifying data to be input to the programmable counter, the frequency of the second IF signal can be easily switched and the prescribed second intermediate frequency can be obtained. In this case, data to be input to the programmable counter has a specific relation to data input to the programmable counter 22 of the switching circuit 21 switching the frequency of the first local oscillation signal.

In this way, by switching the respective frequencies of the first local oscillation signal generated by the first local oscillator 15 and the second oscillation signal generated by the second local oscillator 18, the respective frequencies of the first and second oscillation signals can be easily switched.

Even when in the semiconductor-integration of the receiver 11, an unnecessary signal occurs only after the process has somewhat advanced, the frequency of the first local oscillation signal and that of the second local oscillation signal can be easily selected by simply modifying the input data of the programmable counter.

The configuration of the double-conversion receiver 11 of the preferred embodiment is not limited to the configuration described above.

For example, if an AM/FM receiver is used as the receiver of the preferred embodiment, the first IF filter 16 of the double-conversion AM receiver can also be used as an FM frequency filter. Generally, in an AM/FM receiver, if the double-conversion receiver 11 is used for AM reception, a super-heterodyne receiver is used for FM reception. In this case, the center frequency and bandwidth of a band pass filter eliminating extra signals other than an intermediate frequency for FM reception are 10.7MHz and 200kHz, respectively.

By also using the FM band pass filter as the first IF filter 16 of the double-conversion receiver 11 in the preferred embodiment, the configuration of a double-conversion AM/FM receiver 11 can be simplified.

Even when the band pass filter is also used as the first IF filter, the pass bandwidth of the FM band pass filter is 200kHz and is sufficiently broad. Although as in the preferred embodiment, the frequency of the first IF signal is designed to be selected from 10.71MHz and 10.701MHz, it can be regarded to be 10.7MHz. Therefore, there is no problem in the configuration of the double-conversion receiver 11.

Specifically, by sufficiently expanding the pass band of the first IF filter 16, the first IF filter 16 can function without any problem, even when 10.71MHz or 10.701MHz IF signal passes through the first IF filter 16. In this way, the first IF frequency can be selected from 10.7MHz, 10.71MHz and 10.701MHz. By also using an FM frequency filter as the first IF filter 16, the entire circuit can be miniaturized and cost can be reduced.

Alternatively, in the double-conversion receiver 11, the respective frequency switching of the first and second local oscillators can also be switched by one PLL switching circuit (synthesizer). In this case, it is preferable to input data to the programmable counter 22 so that no unnecessary signal occurs within an incoming signal band, the first IF signal band or the second IF signal band.

In the case of an AM/FM receiver, the first local oscillation signal can also be a signal obtained by dividing the frequency of the local oscillation signal generated by the local oscillator for IF conversion provided for FM reception.

Alternatively, the programmable counter provided for the PLL switching circuit 21 switching a frequency can be a fractional-N (Number) programmable counter in which a frequency division ratio can be freely set.

Alternatively, the programmable counter can switch the frequency of the first local oscillation signal generated by the first local oscillator in such a way that the frequency sum or difference between a frequency obtained by multiplying the frequency of the first local oscillation signal generated by the first local oscillator 15 by a natural number and a frequency obtained by multiplying the frequency of the second local oscillation signal generated by the second local oscillator 18 by a natural number is greater by a prescribed value or more than the frequency of an incoming signal, that of the first IF signal and that of the second IF signal, depending on an incoming signal channel.

According to the receiver of the present invention, since the frequency of the first local oscillation signal generated by the first local oscillator is switched in such a way that the frequency sum or difference between a frequency obtained by multiplying the frequency of the first local oscillation signal by a natural number and a frequency obtained by multiplying the frequency of the second local oscillation signal by a natural number is greater by a prescribed value or more than the frequency of an incoming signal, that of the first IF signal and that of the second IF signal, an unnecessary signal with the frequency sum or difference between a frequency obtained by multiplying the frequency of the first local oscillation signal generated by the first local oscillator 15 by a natural number and a frequency obtained by multiplying the frequency of the second local oscillation signal generated by the second local oscillator 18 by a natural number that is greater by a prescribed value or more than the frequency of an incoming signal, that of the first IF signal and that of the second IF signal can be prevented from entering an incoming frequency band, the first IF band and the second IF band. Accordingly, an unnecessary signal can be prevented from being superposed.

## Claims

1. A receiver, comprising:
a first local oscillator generating a first local oscillation signal;
a first mixer mixing the first local oscillation signal with a received incoming signal and generating a first intermediate frequency (IF) signal;
first frequency switching means for switching a frequency f1 of the first local oscillation signal generated by the first local oscillator;
a second local oscillator generating a second local oscillation signal;
a second mixer mixing the first IF signal with the second local oscillation signal and generating a second IF signal; and
second frequency switching means for switching a frequency f2 of the second local oscillation signal generated by the second local oscillator,
wherein
if N andM are natural numbers, the first frequency switching means switches a frequency of the first local oscillation signal generated by the first local oscillator in such a way that a frequency of N×f1 ± M×f2 is greater by a prescribed value or more than a frequency of the incoming signal, a frequency of the first IF signal and a frequency of the second IF signal, and
the second frequency switching means switches the frequency of the second local oscillation signal in such a way that a frequency of the second IF signal corresponds to the frequency of the first IF signal.

2. The receiver according to claim 1, wherein
said first and second local oscillators are PLL synthesizers, and
respective programmable counters provided for the PLL synthesizers switch the frequency of the first local oscillation signal generated by said first local oscillator and the frequency of the second local oscillation signal generated by the second local oscillator, respectively.

3. The receiver according to claim 1, wherein
respective fractional-N programmable counters of said first and second frequency switching means switch respective frequencies.

4. A receiver, comprising:
a first local oscillator generating a first local oscillation signal;
a first mixer mixing the first local oscillation signal with a received incoming signal and generating a first intermediate frequency (IF) signal;
first frequency switching means for switching a frequency f1 of the first local oscillation signal generated by the first local oscillator;
a second local oscillator generating a second local oscillation signal;
a second mixer mixing the first IF signal with the second local oscillation signal and generating a second IF signal; and
second frequency switching means for switching a frequency f2 of the second local oscillation signal generated by the second local oscillator,
wherein
if N andM are natural numbers, the first frequency switching means switches a frequency of the first local oscillation signal generated by the first local oscillator in such a way that a frequency of N×f1 ± M×f2 is greater by a prescribed value or more than a frequency of the incoming signal, a frequency of the first IF signal and a frequency of the second IF signal within an incoming frequency band, and
the second frequency switching means switches the frequency of the second local oscillation signal in such a way that a frequency of the second IF signal corresponds to the frequency of the first IF signal.

5. The receiver according to claim 4, wherein
said first and second local oscillators are PLL synthesizers, and
respective programmable counters provided for the PLL synthesizers switch the frequency of the first local oscillation signal generated by said first local oscillator and the frequency of the second local oscillation signal generated by the second local oscillator, respectively.

6. The receiver according to claim 4, wherein
respective fractional-N programmable counters of said first and second frequency switching means switch respective frequencies.
